# EUROPÄISCHE PATENTSCHRIFT

(11) **EP 0 656 993 B1**
(45) Veröffentlichungstag und Bekanntmachung des Hinweises auf die Patenterteilung: **08.05.1996**
(21) Anmeldenummer: 92917533.9
(22) Anmeldetag: 22.08.1992
(51) Int. Cl.: F02M 35/10

(54) **ANSAUGANLAGE FÜR EINE BRENNKRAFTMASCHINE**
AIR-ASPIRATION SYSTEM FOR AN INTERNAL-COMBUSTION ENGINE
SYSTEME D'ADMISSION POUR UN MOTEUR A COMBUSTION INTERNE

(43) Veröffentlichungstag der Anmeldung: 14.06.1995
(73) Patentinhaber: Dr.Ing.h.c. F. Porsche Aktiengesellschaft, D-70435 Stuttgart (DE); AVTO-WAZ VOLGA AUTOMOBILE ASSOCIATED WORKS, 445633 Togliatti (SU)
(72) Erfinder: TÖPFER, Walter, D-7135 Iptingen (DE); EBERLE, Franz, D-7000 Stuttgart 40 (DE); KLEINEHAKENKAMP, Norbert, D-7251 Weissach (DE); KRÜGER, Dietmar, D-7259 Friolzheim (DE); FESINA, Michail Iljtch, Gebiet Kujbyschev Togliatti-27, 445027 (RU); STAROBINSKIJ, Rudolf Natanovitch, Gebiet Kujbyschev Togliatti-32, 445032 (RU); LASAREV, Jurij Petrovitch, Gebiet Kujbyschev Togliatti-44, 445044 (RU); LYSENKO, Evgenij Vasiljevitch, Gebiet Kujbyschev Togliatti-32, 445032 (RU)
(86) Internationale Anmeldenummer: EP9201928
(87) Internationale Veröffentlichungsnummer: WO9404814

(56) Entgegenhaltungen:
- DE-A- 2 527 774
- DE-A- 3 219 699
- DE-A- 4 035 016
- DE-C- 510 261
- DE-C- 3 742 057

## Beschreibung

Die Erfindung bezieht sich auf eine Ansauganlage für eine Brennkraftaschine nach dem Oberbegriff des Anspruchs 1.

In einer Ansauganlage entstehen aufgrund eines variablen Luftdurchsatzes zu den einzelnen Zylindern der Brennkraftmaschine Luftschallgeräusche, welche über den Behälter der Anlage nach außen weitergeleitet werden und eine Komfortverschlechterung darstellen.

Aus der DE-A 25 27 774 ist eine Luftansauganlage für eine Brennkraftmaschine bekannt, wobei die Ansauganlage ein Verteilergehäuse und Saugrohre umfasst, welche zu den einzelnen Verbrennungsräumen geführt sind. Innerhalb des Verteilergehäuses sind gekrümmte Teilabschnitte der Saugrohre angeordnet, die mit Teilabschnitten von Saugrohren verbunden sind, welche in die Brennkraftmaschine einmünden.

Aufgabe der Erfindung ist es, eine Ansauganlage für eine Brennkraftmaschine zu schaffen, die eine Reduzierung der Luftschallgeräusche bewirkt.

Diese Aufgabe wird erfindungsgemäß durch die kennzeichnenden Merkmale des Anspruchs 1 gelöst. Weitere vorteilhafte Merkmale beinhalten die Unteransprüche.

Zur Reduzierung von Luftschallgeräuschen ist im Behälter der Ansauganlage eine Luftleitvorrichtung angeordnet, die mit dem Ansaugstutzen verbunden bzw. angeordnet ist. Hierdurch wird die angesaugte Luft im Bereich der zwei ersten Zylindersaugrohre zwangsgeführt. Die Einrichtung kann einstückig mit dem Behälter ausgebildet sein, wobei eine innere Wandung dann im Abstand zu den Einlaßöffnungen der Saugrohre verläuft. Weitere Ausführungen beinhalten eingesetzte Rohre, die über spezielle Befestigungsmittel mit dem Rohrstutzen des Behälters verbunden sind und in diesen freiliegend hineinragen.

Das Rohr besteht aus einem Kunststoff und ist aufgrund der relativ hohen Wandtemperatur des Behälters von etwa 150°C einer Wärmebelastung ausgesetzt, die den Kunststoff erweichen läßt und somit der Halt im Ansaugstutzen reduziert wird.

Beim Abkühlen des Verbrennungsmotors nach Stillstand wird der angeweichte Kunststoff der Rohrwand wieder hart. Bei zahlreichen solchen Aufweichungs - und Erhärtungsvorgängen des Rohres, was einem normalen Betrieb des Verbrennungsmotors entspricht, sowie bei starken Schwingungsbelastungen, denen die Bauteile beim Motorbetrieb unterworfen sind, bildet sich an der Verbindungsstelle zwischen Rohr und Behälter ein Spalt, was zur Zerstörung des Rohres führen kann.

Zur Vermeidung dieses Nachteils ist im Rohr eine Ringrille vorgesehen, in die ein Federring eingesetzt ist. Die Rohrwand weist im Bereich des Federringes eine Verdickung auf, so daß bei Erwärmung des Rohres die Ringrille sich ohne Festigkeitsverlust radial aufweiten kann und eine Lage in einer korrespondierenden Ringnut anliegend einnimmt und somit eine sichere Befestigung gewährleistet ist.

Nach den weiteren Ausführungen ist neben einer Axialsicherung auch eine Drehsicherung zwischen Ansaugstutzen und Rohr vorgesehen. Diese besteht im wesentlichen aus einer sich in Axialrichtung des Rohres erstreckenden erhabenen Ausdrückung, welche in eine entsprechende Ausdrückung des Stutzens eingreift.

Ausführungsbeispiele der Erfindung sind in der Zeichnung dargestellt und werden im folgenden näher beschrieben.

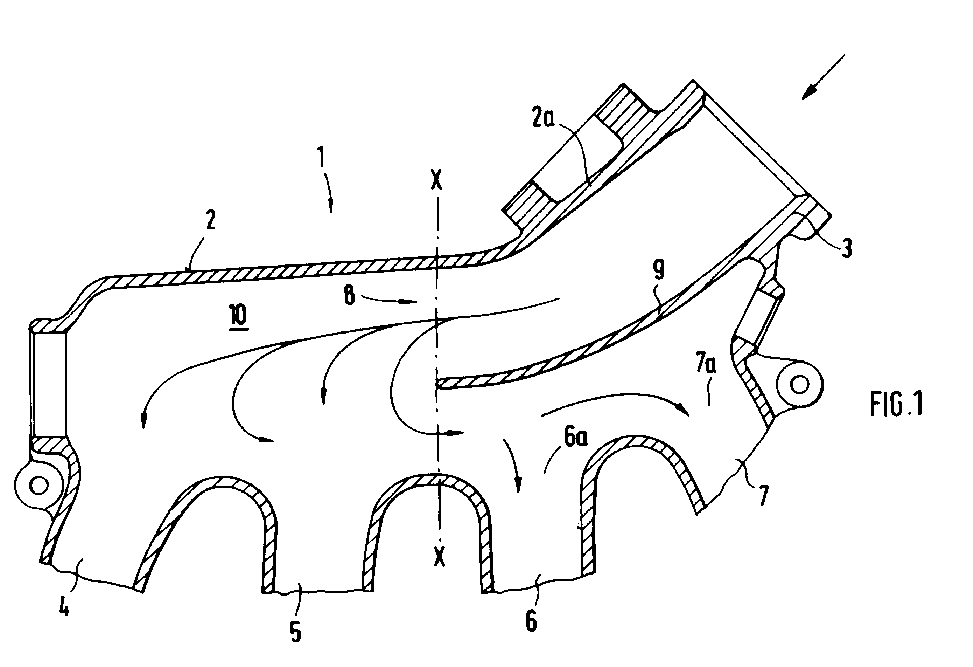

Es zeigen
- Figur 1: eine erste Ausführung einer Luftleiteinrichtung in einteiliger Bauweise mit dem Ansaugbehälter,
- Figur 2: eine weitere Ausführung einer Luftleiteinrichtung bestehend aus einem Rohr mit Befestigungsmitteln
- Figur 3: eine vergrößerte Einzelheit Z der Ringrille mit Ringnut und Federring in einem vorgespannten Zustand der Ringrille,
- Figur 4: die Einzelheit Z in einem entspannten Zustand der Ringrille,
- Figur 5: eine weitere Ausführung eines Rohres mit einer Axial- und Drehsicherung des Rohres im Ansaugstutzen,
- Figur 6: eine vergrößerte Einzelheit X des Festlegungsbereiches des Rohres,
- Figur 7: einen Schnitt nach der Linie VII-VII der Figur 5,
- Figur 8: den Ansaugbehälter mit eingesetztem Rohr im Ansaugstutzen und
- Figur 9: einen Schnitt nach der Linie IX-IX nach Figur 8.

Mit dem Zylinderkopf einer Brennkraftmaschine ist eine Ansauganlage 1 verbunden. Sie besteht im wesentlichen aus einem Behälter 2 mit einem Einlaßstutzen 3 und Einzelsaugrohren 4, 5, 6, und 7, die in den Zylinderkopf einmünden und mit den einzelnen Zylindern der Brennkraftmaschine strömungstechnisch verbunden sind.

Die Luftleiteinrichtung 8 im Behälter 2 umfaßt eine am Einlaßstutzen 3 angegossene Führungswand 9, die sich in den Innenraum 10 des Behälters 2 bis etwa in eine Ebene X-X zwischen den Saugrohren 4 bis 7 erstreckt. Diese Führungswand 9 bildet quasi mit der Außenwand 2a des Behälters 2 ein Rohr, wobei die Innenwand 9 beabstandet zu den Einlaßöffnungen 6a und 7a angeordnet ist, damit eine Luftzuführung gemäß der eingezeichneten Pfeile möglich wird.

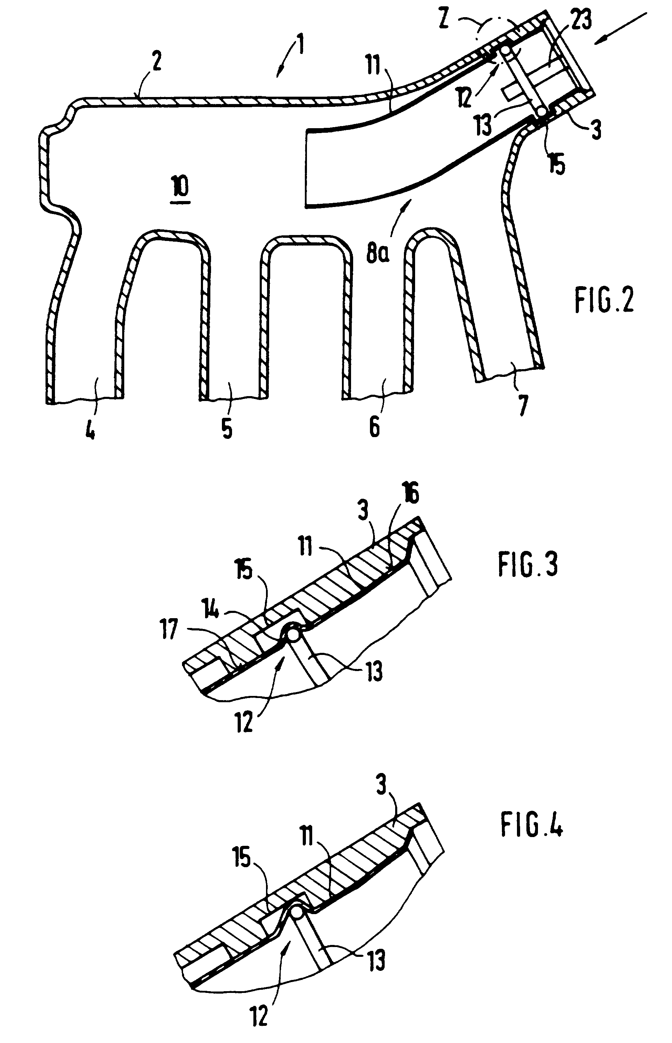

Nach einem weiteren Ausführungsbeispiel gemäß der Figuren 2 bis 4 besteht die Luftleiteinrichtung 8a aus einem eingesetzten Rohr 11, das im Ansaugstutzen 3 des Behälters 2 über Befestigungsmittel 12 in Axialrichtung festgesetzt ist. Dieses Mittel 12 besteht aus einem Federring 13 und ist in einer Ringrille 14 des Rohres 11 gehalten, die korrespondierend mit einer Ringnut 15 im Stutzen 3 angeordnet ist.

Im Bereich der Ringrille 14 ist eine Werkstoffverdickung vorgesehen, so daß bei erwärmten Zustand des Rohres 11 durch die radiale Spannkraft des Federringes 13 sich die Ringrille 14 in die Ringnut 15 anliegend hineinverformt. Eine flächige Abstützung des im Ansaugstutzen 3 gehaltenen Rohres 11 erfolgt über die zu beiden Seiten der Ringnut 15 verlaufende Innenwandflächen 16 und 17 des Stutzens 3.

Bei Start und Betrieb des Verbrennungsmotors strömt die Luft durch den Einlaßstutzen 3, dem Rohr 11 in den Innenraum 10 des Behälters 2 und weiter über die Saugrohre 4, 5, 6 und 7 zu den Einlaßventilen und dann in die Zylinder des Motors. Die sich dabei bewegende Luft kühlt den Bereich des Rohres 11 ab, indem die Flächen 16 und 17 und die Ringnut 15 beströmt werden, wodurch die Temperaturverformung der Kunststoffwand des Rohres 11 verhindert wird, ungeachtet der hohen Wandtemperatur des Behälters 2.

Nach Stillstand des Motors steigt die Temperatur der Behälterwand, u.a. auch der Flächen 16 und 17 wegen der Wärmeübertragung von anderen, höher, als der Behälter 2 aufgewärmter Motorbauteile, z.B. Auspuffkollektor, Dämpfersaugrohr an. Die Wärmeübertragung von der Behälterwand in die darin befindliche Luft ist unwesentlich, da die Luftbewegung wegen des Motorstillstandes fehlt.

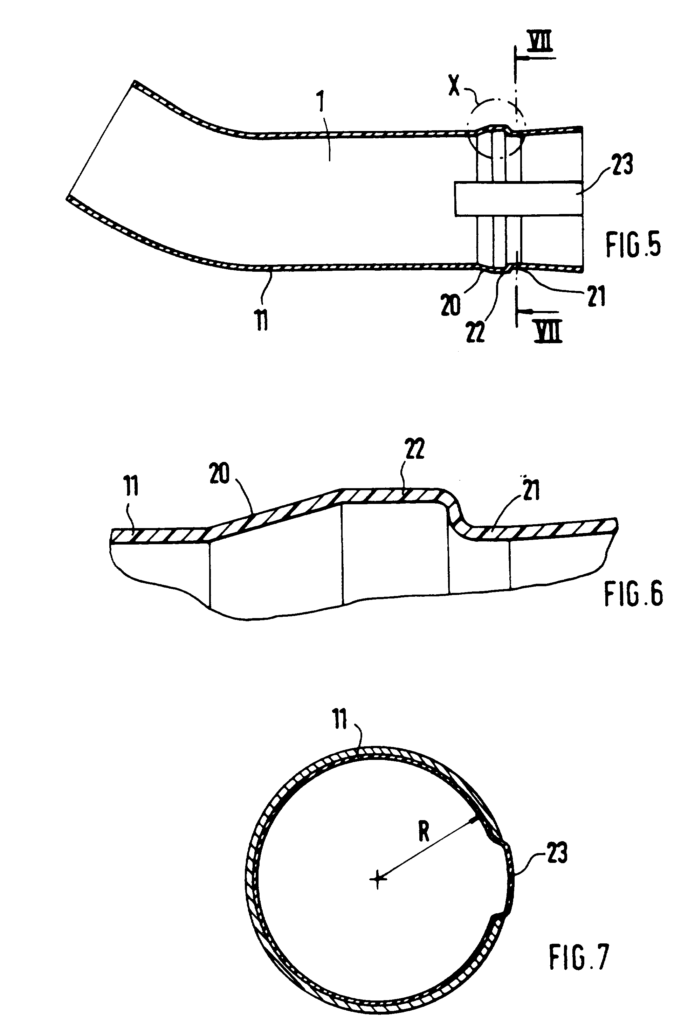

Unter diesen Bedingungen weicht die Rohrwand an den Kontaktstellen mit der Behälterwand auf, wodurch die Radialkraft an diesen Stellen nachläßt, mit der das Rohr im Stutzen 3 des Behälters 2 gehalten wurde. Gleichzeitig verformt der Federring 13 der in die Ringrille 14 eingesetzt ist und eine Radialkraft besitzt, diese Ringrille 14, die dann an die Ringnut 15 herangeführt wird und die Konfiguration gemäß Figur 4 annimmt.

Nach Abkühlen des Motors verhärtet die Kunststoffwand des Rohres 11, aber die Radialkraft zwischen dem Grund der Ringnut 15 und der Außenfläche der Ringrille 14 bleibt durch den Federring bestehen. Die Erwärmungs- und Abkühlungszyklen der Kunststoffwand des Rohres 11 verringern die Radialkraft zwischen der Innenwand des Stutzens 3 und dem Rohr 11 zur Innenwandfläche 16 und 17 nicht; denn der Federring 13 wird immer die verformte Ringrille 14 an die Ringnut 15 andrücken. Außerdem wird die sichere Befestigung des Rohres 11 im Stutzen 3 des Behälters 2 in Axialrichtung wegen des größeren Durchmessers der Ringrille 14 verstärkt.

Nach einer weiteren Ausführung gemäß der Figuren 5 bis 9 ist mit dem Ansaugstutzen 3 eine Luftleiteinrichtung 8a, bestehend aus einem Rohr 11 wie die Ausführung gemäß Figur 2 eingesetzt und über eine zylindrische Passung eingepreßt in Axialrichtung gehalten.

Das Rohr 11 weist ein konisches Einlaufteil 20, ein zylindrisches Passungteil 21 und eine vor Axialverschiebungen sichernde sich weitende Ringrille 22 auf. In der Wand des Rohres 11 ist eine nach außen erhabene Ausdrückung 23 ausgebildet, die sich mit der Ringrille 22 in Axialrichtung überschneidet.

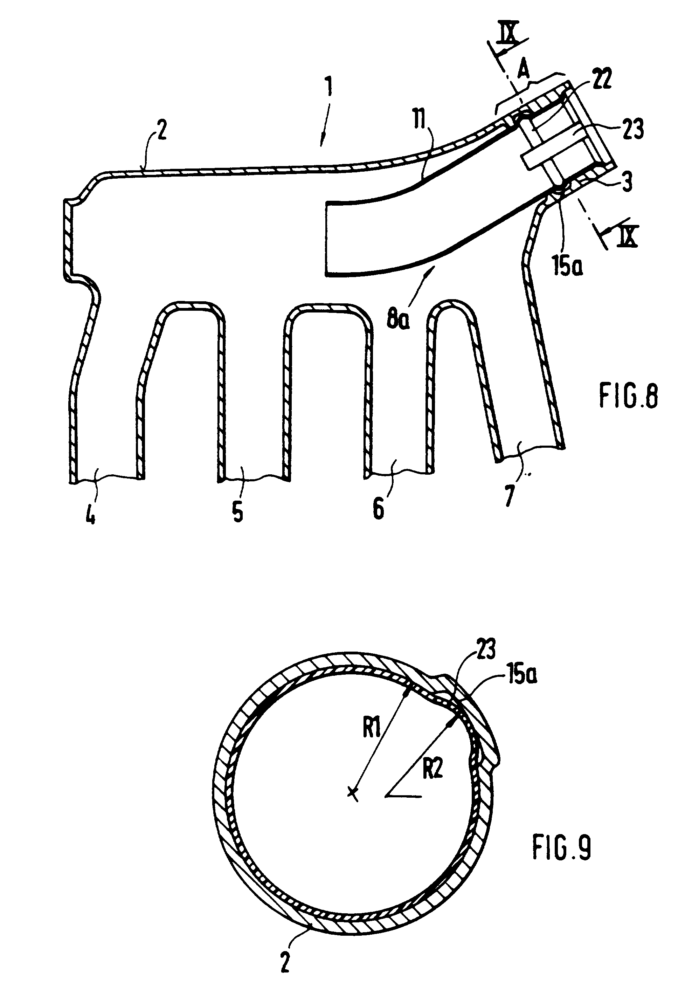

Vor Einbau des Rohres 11 in den Behälter 2 bzw. in den Stutzen 3 ist die Fläche der Ausdrückung 23 abstandsgleich zur Innenfläche des zylindrischen Stutzens 3 mit dem Radius R. Nach kraftmäßigem Einbau des Rohres 11 in den Behälter 2 (Figuren 8 und 9) hat dann die zylindrische Innenfläche des Stutzens 3 im Bereich der Passung einen Radius < R und verringert sich der Radius des Rohres 11 auf R1 (Figur 9). Der Ausgleich der Überlänge auf dem Umfang geschieht hierbei im Bereich der Ausdrückung 23, die dann eine Balligkeit mit dem Radius R2 annimmt.

In der Wand des Behälters ist eine Ringnut 15a zur Aufnahme der Ausdrückung 23 nach Einbau des Rohres 11 in den Stutzen 3 ausgebildet-In Zusammenhang damit, daß die größte Kraft bei der Montage des Rohres 11 in den Stutzen 3 beim Durchgang der sich weitenden Ringrille 22 auf der Stutzenoberfläche vor Einbau des Rohres 11 in die zylindrische Passung 21 entsteht, überschneidet die Ausdrückung 23 in Axialrichtung die sich weitende Ringrille 22, wodurch ein positiver Effekt bezüglich der Festigungssicherheit des Rohres 11 und seiner Montage im Behälterinneren erreicht wird.

Die Ausführung gemäß Figur 2, bei der die Axialsicherung über den Federring 13 erfolgt, kann auch eine Drehsicherung mit einer axial sich erstreckenden Ausdrückung 23 aufweisen, die in ein Axialnut 15a einrastet, wie die Ausführung nach Figur 9 näher zeigt.

## Patentansprüche

1. Ansauganlage für eine Brennkraftmaschine, mit einem einen Behälter umfassenden Saugverteiler, dei einströmseitig einen Ansaugstutzen (3) und ausströmseitig mehrere Einzelsaugrohre (4, 5, 6, 7) aufweist, die in einen Zylinderkopf der Brennkraftmaschine einmünden und mit den einzelnen Zylindern verbunden sind, **dadurch gekennzeichnet**, daß der Ansaugstutzen (3) eine Luftleiteinrichtung (8) aufweist, die sich quer zu den Innenöffnungen der Einzelsaugrohre (6,7) etwa bis zu einer zwischen den beiden von den äußeren Einzelsaugrohren (4 und 7) eingeschlossenen mittleren Einzelsaugrohren (5, 6) verlaufenden Ebene (X-X) erstreckt, die in Achsrichtung der Einzelsaugrohre (4, 5) verläuft, wobei die Innenöffnungen der Einzelsaugrohre (4,5,6,7) auf derselben Seite bezüglich des Ansaugstutzens (3) angeordnet sind und eine den Innenöffnungen (6a, 7a) der Saugrohre (6, 7) zugerichtete Wandung (9) der Luftleiteinrichtung (8) beabstandet zu diesen Öffnungen (6a und 7a) angeordnet ist.

2. Ansauganlage nach Anspruch 1, **dadurch gekennzeichnet**, daß die Luftleiteinrichtung (8) ein zylindrisches Lufttührungselement umfaßt, das mit dem Ansaugstutzen (3) des Saugverteilers (1) ein gegossenes einstückiges Bauteil bildet, dessen Außenwandung (2a) vom Behälter (2) und dessen Innenwandung (9) freiliegend im Behälterinnenraum (10) angeordnet ist.

3. Ansauganlage nach Anspruch 1, **dadurch gekennzeichnet**, daß die Luftleiteinrichtung (8a) aus einem mit dem Ansaugstutzen (3) über ein Befestigungsmittel (12) zur Axialsicherung verbundenem Kunststoffrohr (11) besteht, das mit einem zylindrischen Abschnitt eingepaßt im Rohrstutzen (3) gehalten ist und mit seinem diesen Abschnitt abgekehrten Enden freiliegend zur Behälterwand in den Innenraum (10) hineinragt.

4. Ansauganlage nach Anspruch 3, **dadurch gekennzeichnet**, daß das Befestigungsmittel (12) aus einem Federring (13) besteht, der in eine Ringrille (14) des Rohres (11) eingreift, die korrespondierend mit einer Ringnut (15) im Ansaugstutzen (3) angeordnet ist.

5. Ansauganlage nach den Ansprüchen 3 oder 4, **dadurch gekennzeichnet**, daß das Kunststoffrohr (11) im Bereich der Aufnahme des Federringes (13) in der Ringrille (14) eine Werkstoffverdickung aufweist und die im erwärmten Zustand des Rohres (11) vom Federring (13) radial aufweitend verformbar und im Grund der Ringnut (15) anliegend ist.

6. Ansauganlage nach den Ansprüchen 3 oder 5, **dadurch gekennzeichnet**, daß der im Ansaugstutzen (3) eingepaßte Rohrabschnitt (A), eine Drehsicherung (15a, 23) aufweist, die aus einer in Axialrichtung des Rohres (11) sich erstreckende Ausdrückung (23) besteht, welche in einer Axialnut (15a) des Ansaugstutzens (3) angeordnet ist.

7. Ansauganlage nach dem Anspruch 6, **dadurch gekennzeichnet**, daß der eingepaßte Rohrabschnitt (A) einen konischen Einlaufteil (20) mit anschließender Ringrille (22) aufweist, die nach außen aufgeweitet ist und sich mit einer in axialer Rohrrichtung verlaufenden Ausdrückung (23) kreuzt, die korrespondierend mit der Axialnut (15a) im Ansaugstutzen (3) angeordnet ist.

## Claims

1. An intake unit for an internal-combustion engine, with a suction distributor comprising a container and having an intake socket (3) at the inflow end and a plurality of individual intake pipes (4, 5, 6, 7) at the outflow end, the intake pipes (4, 5, 6, 7) opening into a cylinder head of the internal-combustion engine and being connected to the individual cylinders, **characterized in that** the intake socket (3) comprises an air-guiding device (8) extending transversely to the inner openings of the individual intake pipes (6, 7) substantially as far as a plane (**X-X**) which extends between the two middle individual intake pipes (5, 6) interposed between the outer individual intake pipes (4 and 7) and which extends in the axial direction of the individual intake pipes (4, 5), wherein the inner openings of the individual intake pipes (4, 5, 6, 7) are arranged on the same side with respect to the intake socket (3), and a wall (9) of the air-guiding device (8) facing the inner openings (6a, 7a) of the intake pipes (6, 7) is arranged at a distance from the said openings (6a, 7a).

2. An intake unit according to Claim 1, **characterized in that** the air-guiding device (8) comprises a cylindrical air-guiding member forming together with the intake socket (3) of the suction distributor (1) a cast one-piece component, the outer wall (2a) of which [extends] from the container (2) and the inner wall (9) of which is arranged free in the interior (10) of the container.

3. An intake unit according to Claim 1, **characterized in that** the air-guiding device (8a) comprises a plastics tube (11) connected to the intake socket (3) by way of a fastening means (12) for securing it axially and held with a cylindrical portion fitted in the pipe socket (3) and projecting into the interior (10) freely towards the container wall with its end remote from the said portion.

4. An intake unit according to Claim 3, **characterized in that** the fastening means (12) comprises a spring ring (13) engaging in an annular groove (14) in the tube (11) arranged corresponding to an annular channel (15) in the intake socket (3).

5. An intake unit according to Claim 3 or 4, **characterized in that** the plastics tube (11) has a thickening of material in the region of the receiving means of the spring ring (13) in the annular groove (14), the thickening of material being deformable by the spring ring (13) in a radially expanding manner in the heated state of the tube (11) and resting in the base of the annular channel (15).

6. An intake unit according to Claim 3 or 5, **characterized in that** the pipe portion (**A**) fitted in the intake socket (3) has a rotation-preventing means (15a, 23) which comprises a pressed-out portion (23) extending in the axial direction of the tube (11) and arranged in an axial groove (15a) in the intake socket (3).

7. An intake unit according to Claim 6, **characterized in that** the fitted pipe portion (**A**) has a tapered entry part (20) with an adjoining annular groove (22) which is widened towards the outside and intersects a pressed-out portion (23) extending in the axial direction of the pipe and arranged in a manner corresponding to the axial groove (15a) in the intake socket (3).

## Revendications

1. Système d'admission pour un moteur à combustion interne, avec un distributeur d'aspiration comprenant un réservoir, qui comporte côté arrivée une tubulure d'admission (3) et côté sortie plusieurs tubes individuels d'aspiration (4, 5, 6, 7), qui débouchent dans une culasse de cylindre du moteur à combustion interne et qui sont reliés aux différents cylindres, caractérisé en ce que la tubulure d'admission (3) comporte un dispositif de guidage d'air (8), qui s'étend, transversalement aux orifices intérieurs des tubes individuels d'aspiration (6, 7), à peu près jusqu'à un plan (X-X) passant entre les deux tubes individuels d'aspiration (5, 6) centraux, enfermés par les tubes individuels d'aspiration (4 et 7) extérieurs, lequel plan s'étend dans la direction axiale des tubes individuels d'aspiration (4, 5), les orifices intérieurs des tubes individuels d'aspiration (4, 5, 6, 7) étant placés sur la même paroi (9), tournée vers les orifices intérieurs (6a, 7a) des tubes d'aspiration (6, 7), du dispositif de guidage d'air (9), à distance de ces orifices (6a et 7a).

2. Système d'admission selon la revendication 1, caractérisé en ce que le dispositif de guidage d'air (8) comprend un élément de guidage d'air cylindrique, qui forme, avec la tubulure d'admission (3) du distributeur d'aspiration (1), un composant coulé d'une seule pièce, dont la paroi extérieure (2a) est disposée ... du réservoir (2) et dont la paroi intérieure (9) est disposée reposant librement dans le volume intérieur (10) du réservoir.

3. Système d'admission selon la revendication 1, caractérisé en ce que le dispositif de guidage d'air (8a) est constitué d'un tube en matière plastique (11) relié à la tubulure d'admission (3), par un moyen de fixation (12) en vue de la fixation axiale, lequel est maintenu ajusté dans la tubulure (3), par une portion cylindrique et s'engage dans le volume intérieur (10), avec son extrémité tournée à l'opposé de cette portion, libre par rapport à la paroi du réservoir.

4. Système d'admission selon la revendication 3, caractérisé en ce que le moyen de fixation (12) est constitué d'un anneau-ressort (13), qui s'engage dans une gorge annulaire (14) du tube (11), qui, en correspondance avec une rainure annulaire (15), est placée dans la tubulure d'admission (3).

5. Système d'admission selon les revendications 3 ou 4, caractérisé en ce que le tube en matière plastique (11) présente une surépaisseur de matière, dans la région du logement de l'anneau-ressort (13) dans la gorge annulaire (14), et qui, à l'état chauffé du tube (11), est déformable radialement, par l'anneau-ressort (13), en s'élargissant, et s'applique dans le fond de la rainure annulaire (15).

6. Système d'admission selon les revendications 3 ou 5, caractérisé en ce que la portion de tube (A), ajustée dans la tubulure d'admission (3), comporte un blocage en rotation (15a, 23), qui est constitué d'une partie pressée à l'extérieur (23), s'étendant dans la direction axiale du tube (11), qui est placée dans une rainure axiale (15a) de la tubulure d'admission (3).

7. Système d'admission selon la revendication 6, caractérisé en ce que la portion de tube (A) ajustée à l'intérieur, présente une partie d'entrée conique (20) avec gorge annulaire (22) se raccordant, qui est élargie vers l'extérieur et qui se croise avec une partie pressée à l'extérieur (23), s'étendant dans la direction axiale du tube, laquelle est placée en correspondance avec la rainure axiale (15a), dans la tubulure d'admission (3).
